# EUROPEAN PATENT SPECIFICATION

(11) **EP 4 038 356 B1**
(45) Date of publication and mention of the grant of the patent: **22.04.2026**
(21) Application number: 20700355.9
(22) Date of filing: 08.01.2020
(51) Int. Cl.: G01L 5/24, F16B 31/02, G01L 1/22

(54) **INSTRUMENTED, LOAD-SENSING WASHER**
INSTRUMENTIERTE LASTFÜHLENDE UNTERLEGSCHEIBE
RONDELLE INSTRUMENTÉE À DÉTECTION DE CHARGE

(30) Priority: 26.11.2019 EP 19315145
(43) Date of publication of application: 10.08.2022
(73) Proprietor: JPB Système, 77950 Montereau sur le Jard (FR)
(72) Inventor: BEAUMEL, Jonathan, 77360 Vaires sur Marne (FR); MARC, Damien, 77115 Blandy (FR); MESSAGER, Denis, 77000 Melun (FR); DIOH, Emmanuel Ferdinand, 77000 Melun (FR)
(74) Representative: Schlotter, Alexander Carolus Paul
(86) International application number: PCT/EP2020/050315
(87) International publication number: WO 2021/104679

(56) References cited:
- EP-B1- 0 766 077
- WO-A1-2017/064847
- DE-A1- 102012 020 932
- DE-A1- 102016 111 533
- DE-U1- 202016 000 321
- FR-A1- 2 890 442
- KR-A- 20190 033 671
- SE-A1- 1 630 186
- US-A1- 2019 195 263
- US-A1- 2019 226 886
- US-B1- 6 580 363
- KEITH R.E.: "Potting Electronic Modules", A REPORT, 1 January 1969 (1969-01-01), pages 1 - 74, XP093038555

## Description

### Technical Field

The present invention relates generally to components of a bolted joint and, more particularly, to an instrumented washer for use in a bolted joint.

### Background

Bolted joints are commonly used to join together two or more articles to create an assembly. In certain applications, it may be important to determine and/or maintain the clamping force of a given bolted joint, particularly in assemblies wherein the joint is subject to vibration, cyclic loading, or variations in operating temperature. Non-limiting examples of such applications may include bolted joints used in machinery, railways, power generation facilities, and aircraft. Conventional methods for determining the clamping force of a bolted joint include using a wrench or similar tool that is adapted to determine a torque applied to the bolt or nut of the joint. These conventional methods are time consuming, particularly when there are numerous bolted joints to be checked, and typically only approximate the axial clamping load on the joint based upon the measured torque. In certain applications it may be beneficial to determine the value of the clamping force at installation, and also periodically during use, such as at periodic maintenance intervals. It may also be beneficial to store information related to the clamping force for historical records or analytical purposes.
US 2019/226886 A1 refers to a sensor unit for measuring and monitoring a plurality of parameters associated with an asset or equipment having a fixing connected thereto, wherein the sensor unit has a housing having a portion for receiving a fixing therethrough; sensors arranged to measure and/or monitor parameters associated with a fixing that is secured to the asset via housing and/or parameters influencing the performance of the asset; a processor configured to process data from the sensors; and a communicator adapted to transmit said data to a remote device.
DE 10 2012 020 932 A1 refers to a force measuring plate comprising a plate element and a sensor system for detecting forces acting perpendicularly to the plate surfaces, the sensor system comprising at least one strain sensor which is arranged on a peripheral surface.
EP 0 766 077 A1 relates to a force sensor (2) making it possible to control the tightening in an assembly of parts (3, 5) produced by means of a stud (1) and comprising a shell (4) in the form of a washer, arranged between the nut (7) and the parts and inside which are arranged strain gauges (6a, 6b) connected to computing means capable of determining the mean stress distributed over the shell.
SE 1630186 Al disclose an intelligent bolt includes a head region and a threaded region wherein the head region includes a bolt cavity, a distance between the head region and a bottom end of the cavity changes in operation as a function of longitudinal stress applied between the threaded region and the head region, and the bolt includes a sensor arrangement for measuring changes in the distance, a distal end of the sensor arrangement is disposed adjacent to the bottom end, wherein changes in spatial position of the bottom end relative to the distal end occur as a function of changes in the stress applied to the bolt to define a gap "G" whose size varies depending upon the stress.
DE 20 2016 000 321 U1 discloses an electronic apparatus installable in a bicycle for determining a first quantity indicative of or corresponding to the force and/or power exerted by a cyclist on a pedal of the bicycle, said bicycle being equipped with a pedal arm and a pedal body coupled to the pedal arm via a pedal axle bearing extending along a longitudinal axis approximately orthogonal to the pedal arm, said electronic apparatus comprising: a sensor circuit provided with deformation sensors permanently arranged on an outer surface portion of said pedal axle bearing between the pedal arm and the pedal body for providing electrical measurement signals indicative of or corresponding to a quantity of deformation caused by the force exerted by the cyclist on the pedal axle bearing.

### Summary

The present invention refers to an instrumented, load-sensing washer according to claim 1 that can be used on a bolted joint to facilitate determining an axial clamping load of the bolted joint and to a method for making the instrumented washer according to claim 11 or for determining a load in a bolted joint according to claim 10 including the instrumented washer respectively.

In one aspect, the washer includes an annular washer body having first and second oppositely disposed axial ends and an outer circumferential sidewall. One or more strain gauges are provided on the circumferential sidewall and are configured to sense a deformation of the washer body do to clamping forces of the bolted joint. The washer further includes a communication assembly operatively coupled with the at least one strain gauge or one or more of the strain gauges respectively. The communication assembly may include an integrated circuit adapted to receive electrical signals from the at least one strain gauge or one or more of the strain gauges respectively related to the axial load borne by the washer.

In another aspect, a method for determining a load in a bolted joint includes obtaining a bolted joint including an instrumented washer in accordance with the principles of the present disclosure, powering the integrated circuit of the washer with an, in particular wireless, reader device, querying the integrated circuit, and displaying and/or storing information on the reader device related to an axial force borne by the washer in the bolted joint. In another aspect, a method of making an instrumented washer in accordance with the principles of the present disclosure includes fixing one or more strain gauges to an outer circumferential surface of a washer body, coupling an integrated circuit and/or an antenna with the at least one strain gauge or one or more of the strain gauges respectively, and - according to one embodiment - securing a cover on the washer body such that the at least one strain gauge is enclosed within a space defined between the outer circumferential sidewall and the cover.

The above and other objects and advantages of the present invention shall be made apparent from the accompanying drawings and the description thereof.

### Brief Description of the Drawings

FIG. 1 depicts a system with a cross-sectional view of a typical bolted joint installation including an instrumented washer in accordance with the principals of the present disclosure.
FIG. 2 is a perspective view of the exemplary instrumented washer of FIG. 1.
FIG. 3 is a top plan view of the washer of FIG. 2.
FIG. 4 is an exploded perspective view of the washer of FIG. 2.
FIG. 5 is a side elevation view of the washer body depicted in FIG. 4, with cover and support platform removed for clarity.

### Detailed Description

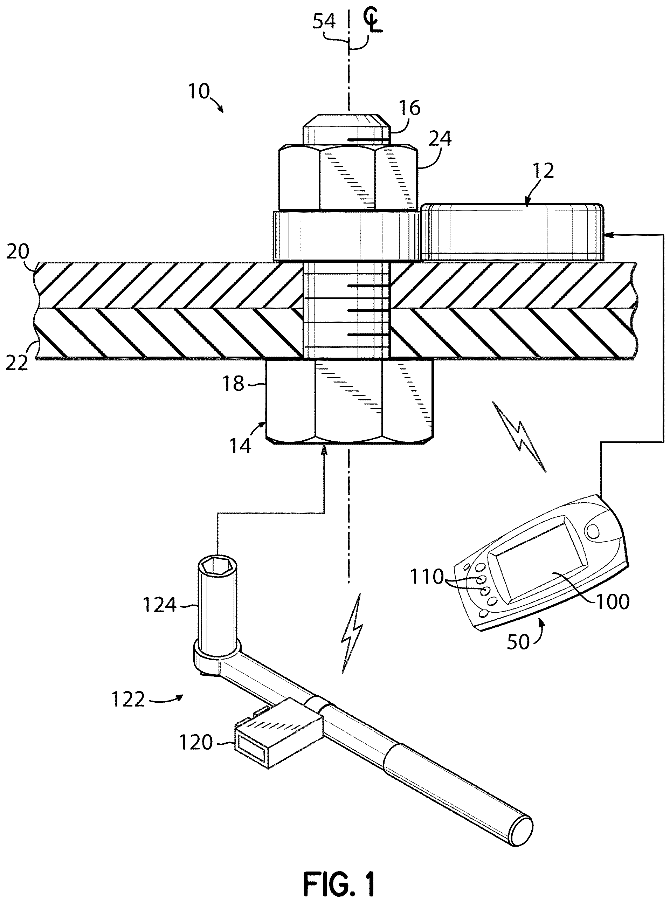

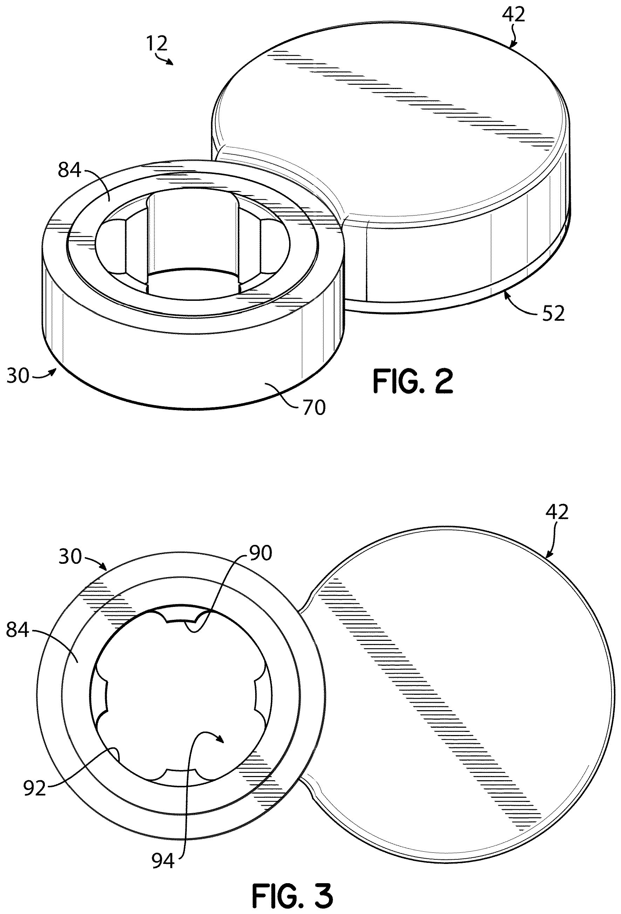

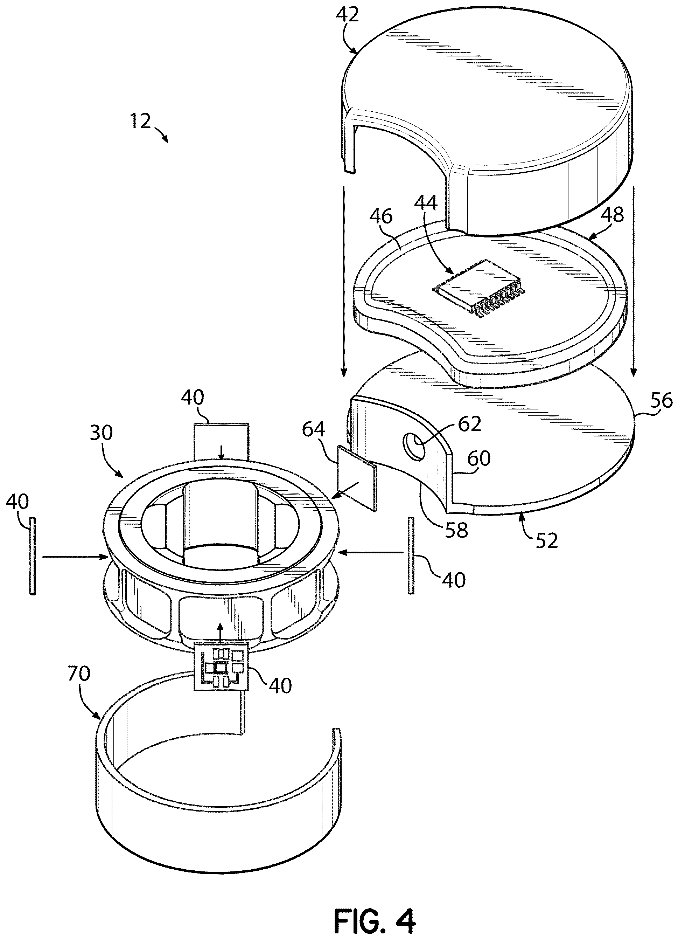

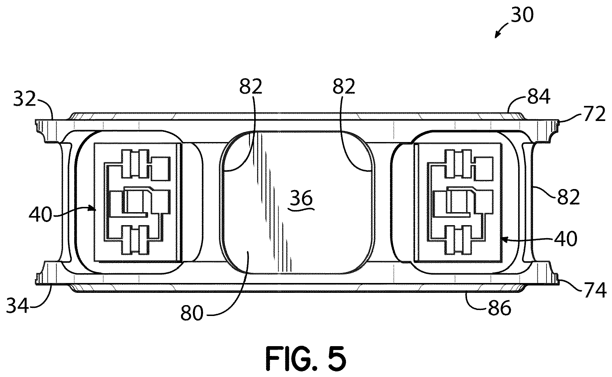

FIG. 1 depicts a typical bolted joint 10 including an exemplary instrumented washer 12 in accordance with the principals of the present disclosure. The bolted joint 10 includes a threaded fastener 14 in the form of a bolt having a threaded shank 16 and a bolt head 18. The threaded shank 16 of the fastener 14 is inserted through respective apertures on one or more components 20, 22 that are to be joined with the fastener 14. The washer 12 is also installed onto the shank 16, and may be located adjacent the bolt head 18 or, alternatively, adjacent a nut 24 that is installed onto the fastener 14. With continued reference to FIG. 1, and referring further to FIGS. 2-5, the exemplary washer 12 includes a generally cylindrically-shaped annular washer body 30 having first and second oppositely disposed axial ends 32, 34, and an outer circumferential sidewall 36. In one embodiment, the washer body 30 may be machined from a single piece of material, such as stainless steel. However, it will be appreciated that the washer body 30 may alternatively be formed by two or more body portions assembled together, and that the washer body 30 may be formed by various other methods suitable for producing a washer 12 that meets the requirements for a given application.

One or more strain gauges 40 are disposed on the outer circumferential sidewall 36 of the washer body 30 and may be secured to the outer circumferential sidewall 36, such as with adhesive or epoxy, or by any other method suitable for affixing the one or more strain gauges 40 to the outer sidewall 36 such that the strain gauges 40 are able to detect deformation of the washer body 30 due to external loading, such as when the washer 12 is clamped in a bolted joint 10. In the embodiment shown, the washer 12 includes four strain gauges 40 arranged substantially symmetrically around the circumference of the washer body 30. In an exemplary embodiment, one or more of the strain gauges 40 may be configured as a Wheatstone bridge, whereby accurate readings of a change in resistance of the strain gauges 40 may be obtained and the strain gauges 40 thereby provide a robust system that is stable and less sensitive to variations in temperature and magnetic fields. Depending upon the number and arrangement of strain gauges 40 then, the strain gauges 40 may be configured in various forms as a quarter, half, or full Wheatstone bridge, as may be suitable or desired for a given application.

In another embodiment, the strain gauges 40 may additionally, or alternatively, comprise ceramic material, whereby the operating temperature range of the strain gauges is sufficiently high for use in aerospace applications, such as on aircraft engines for example. As a non-limiting example, the operating temperature range of the strain gauges 40 may be higher than approximately 220 degrees Celsius. Additionally, or alternatively, the strain gauges 40 may be configured to have a relatively high operating resistance compared to conventional strain gauges. As a non-limiting example, the strain gauges 40 may have an operating resistance range of about 16 kiloohms to about 22 kiloohms. As a result of the high operating resistance, a washer 12 as disclosed herein consumes very little power. Accordingly, operation of the washer 12 may be powered by power that is wirelessly received from an external device, as will be described hereinbelow.

The washer 12 further includes a communication assembly 42 operatively coupled with the at least one strain gauge 40 and configured to communicate information related to the axial load borne by the washer 12 in the bolted joint 10. In the embodiment shown, the communication assembly includes an integrated circuit 44 that is adapted to receive electrical signals from the at least one strain gauge 40 related to the axial load of the washer 12. The communication assembly 42 includes an antenna 46 for transmitting electric signals to an external device. While the antenna 46 is depicted herein as separate from the integrated circuit 44, the antenna 46 may alternatively be incorporated within the structure of the integrated circuit 44. The washer 12 may include hardwired connections between the one or more strain gauges 40 and the integrated circuit 44, or communication between the strain gauges 40 and the integrated circuit 44 may be carried out via wireless communication, as may be desired or suitable for a given application.

In one embodiment, the integrated circuit 44 may be, for example, a model number MLX90129 microchip available from Melexis, Inc. of Novi, Michigan, and may be provided on a printed circuit board 48. The integrated circuit 44 may include a memory for storing identification information related to the washer 12, the bolted joint 10 installation, an installation date, a last query date, information related to a load or force borne by the washer 12, or various other information. The integrated circuit 44 is configured to receive electrical signals from the one or more strain gauges 40 corresponding to loads experienced by the washer 12. The integrated circuit 44 may convert the signals to a corresponding load value borne by the washer 12, or the integrated circuit 44 may transmit information to an external device, such as a reader 50, for subsequent processing of the information. In one embodiment, the integrated circuit 44 is configured to wirelessly transmit signals to an external reader 50, such as by radio frequency technology (RFID). Alternatively, various other methods or technologies may be utilized to wirelessly transmit signals and information between the integrated circuit 44 and an external reader 50, such as, for example, Bluetooth, Wi-Fi, or other technology.

The integrated circuit 44 may be configured for passive RFID, wherein the integrated circuit 44 receives power from an external device, such as a reader 50, when the device is brought within range of the washer 12 when it is desired to interrogate the integrated circuit 44. Upon receiving sufficient power from the external device, the integrated circuit 44 receives signals from the one or more strain gauges 40 and transmits information to the reader 50 related to the load borne by the washer 12. When the operating resistance of the strain gauges 40 is sufficiently high, the power received from the external device may also power the strain gauges 40, as discussed above. Accordingly, the washer 12 can be configured to operate without the need for an on-board power source, such as a battery. Alternatively, the integrated circuit 44 may be configured for active RFID and the communication assembly 42 may further includes a power source, such as a battery or any other power source suitable for self-powering the integrated circuit 44.

In the embodiment shown, the communication assembly 42 is located on a support platform 52 extending radially outwardly from the washer body 30 such that the support platform 52 is offset from an axial centerline 54 of the washer body 30. Such a configuration facilitates wireless communication between the washer 12 and an external device such as a reader 50. In another embodiment the integrated circuit 44 and the antenna 46 and optionally one or more of the strain gauges 40 are encapsulated in a polymeric material, resulting in a sealed arrangement that protects the electronic components of the washer 12 from the effects of vibration or impacts with other objects. The polymeric material is over-molded onto the washer 12.

In the embodiment shown, the support platform 52 comprises a substantially circular-shaped disk 56 wherein a portion 58 of the perimeter of the disk 56 has a radius of curvature opposite the radius of curvature of the outer circumference of the disk 56. This arcuate portion 58 of the perimeter is sized and shaped complementary to the contour of the washer body 30 to facilitate joining the support platform 52 to the washer body 30, such as by welding or any other suitable method. The support platform 52 may further include a coupling wall 60 extending in an axial direction outwardly from the disk 56 to facilitate joining the support platform 52 to the washer body 30. In the embodiment shown, an aperture 62 is formed through the coupling wall 60 to facilitate routing wires from the strain gauges 40 on the washer body 30 to the integrated circuit 44 on the support platform 52. In one embodiment, the washer 12 may further include a second printed circuit board 64 disposed between the washer body 30 and the support platform 52 to facilitate routing electrical connections between the strain gauges 40 and the integrated circuit 44. For example, wires extending from the strain gauges 40 may be electrically coupled with the second circuit board 64, and other wires extending from the second circuit board 64 may be routed through the aperture 62 in the coupling wall 60 for connection to the integrated circuit 44.

The exemplary washer 12 may further include a protective cover 70 received over the outer circumferential sidewall 36 of the washer body 30 such that the one or more strain gauges 40 are enclosed between the cover 70 and the sidewall 36. In the embodiment shown, the washer body 30 further includes first and second radially outwardly extending flanges 72, 74 extending from the washer body 30 at the first and second axial ends 32, 34, respectively, and the protective cover 70 may be attached to the washer body 30 at the first and second flanges 72, 74. For example, the protective cover 70 may be securely fixed at the flanges 72, 74 such as by welding, press fit, adhesive, or any other method suitable for securing the cover 70 to the washer body 30. In the same manner, the support platform 52 may be attached to the washer body 30 at the first and second flanges 72, 74. In the exemplary embodiment shown, the coupling wall 60 on the support platform 52 cooperates with the cover 70 to enclose the strain gauges 40 on the washer body 30. While the cover 70 is shown and described herein as comprising a single cover section that cooperates with the coupling wall 60 to enclose the strain gauges 40, it will be appreciated that the cover 70 may alternatively comprise a single cover structure that encloses the entire washer body 30, or may comprise two or more two sections, as may be desired.

With continued reference to FIGS. 2-5, the washer body 30 may be further configured with one or more flat surfaces, or facets 80, on the outer circumferential sidewall 36 to receive the one or more strain gauges 40. In the embodiment shown, the facets 80 are recessed into the outer sidewall 36 to define distinct pockets surrounding the facets 80 and separated by axially extending ridges 82. The ridges 82 may facilitate mounting the strain gauges 40 to the washer body 30, wherein the ridges 82 may be used as registration features to help properly locate the strain gauges 40 on the facets 80. The exemplary washer body may further include an annular raised contact surface 84, 86 extending axially from one or both of the first and second axial ends 32, 34. The raised contact areas 84, 86 engage structure adjacent the washer 12 in the assembled bolted joint 10 and bear the load of the clamped joint. The geometry of the first and second contact areas 84, 86 can be controlled to facilitate measurement and calculation of the load borne by the washer 12 in use.

The interior of the washer body 30 includes a plurality of protrusions 90 extending radially inwardly from the inner sidewall 92 to define a plurality of axially extending channels 94 therebetween. The protrusions 90 may be symmetrically arranged around the inner circumference of the sidewall 92 and may be sized and configured to facilitate a sliding fit with the shank 16 of a bolt 14 received through the washer 12 when assembled in a bolted joint 10.

With reference again to FIG. 1, an instrumented, load-sensing washer 12 in accordance with the principals of the present disclosure may be used in a bolted joint 10 to facilitate installing and maintaining the bolted joint 10 at a desired clamping load. In use, the bolted joint 10 is assembled with a washer 12 in accordance with the present disclosure and the joint 10 is tightened with an appropriate tool. During tightening, the load borne by the washer 12 may be checked to determine the clamping load of the bolted joint 10. In one embodiment in which the washer 12 is configured for passive RFID communication, a reader 50, such as an M3 ORANGE+ mobile reader available from M3 Mobile Co., Ltd. of Seoul, Korea, for example, is brought near the washer 12 and is activated to query the washer 12 for load information. Radio frequency signals from the reader 50 provide power to the integrated circuit 44 as described above. The integrated circuit 44 then receives signals from the one or more strain gauges 40 on the washer body 30 and transmits information wirelessly to the reader 50 related to the load borne by the washer 12 in the joint 10. The user may thereafter adjust the tightness of the bolted joint 10 based on the information. The information may also be stored for historical record keeping or analytical purposes. The reader 50 may be configured in various ways to provide an indication of the load borne by the washer 12 to the user. In one embodiment, the reader 50 may include a visual display 100 whereby information related to the load borne by the washer 12 may be visually presented to the user to facilitate adjusting the tightness of the bolted joint 10 to obtain a desired clamping load. Alternatively, or in addition, the reader 50 may be configured to provide an indication of the load borne by the washer 12 in the form of audio signals and/or tactile sensory indications, such as vibrations that can be perceived by the user. The reader 50 may further include virtual or physical buttons 110 or other input devices to facilitate operation of the reader 50 by a user.

In another embodiment, a reader 120 may be integrated with a tool 122 that is configured to facilitate tightening a bolted joint 10 including a washer 12 in accordance with the principles of the present disclosure. In the embodiment shown, the tool 122 includes a fastener engaging portion 124 that is adapted to engage the fastener 14 when tightening (or conversely, loosening) the bolted joint 10. The tool 122 may be configured to operate by the manual application of force by a user, or may be configured for automated application of force to the fastener 14, such as by a drive motor. The reader 120 is provided on the tool 122 and is configured to exchange radio frequency signals with the integrated circuit 44 during tightening, and to provide an indication to the user related to the load borne by the washer 12 in a manner as described above. The reader 120 may also be configured to store information related to the load for historical record keeping or analytical purposes, or to transmit information related to the load to other external devices or computers.

In another embodiment, readers or antennae for receiving signals from load-sensing washers in accordance with the present disclosure may be provided on or integrated with the structure that is joined with the bolted joint. As a non-limiting example, a bolted joint including a washer in accordance with the present disclosure may be used to join two or more structural members in an aircraft installation, and the structural members, or other parts of the aircraft, may be outfitted with suitable readers or antennae adapted to provide power to and/or communicate with the washer to obtain information from the washer related to a load borne by the washer in the bolted joint.

While the present invention has been illustrated by a description of various embodiments, and while these embodiments have been described in considerable detail, it is not intended to restrict or in any way limit the scope of the appended claims to such detail. The various features shown and described herein may be used alone or in any combination. Additional advantages and modifications will readily appear to those skilled in the art. The invention in its broader aspects is therefore not limited to the specific details, representative apparatus and method, and illustrative example shown and described. Accordingly, departures may be made from such details within the scope of the claims.

## Claims

1. An instrumented washer (12), in particular a load-sensing washer, comprising:
an annular washer body (30) having first and second oppositely disposed axial ends (32, 34) and an outer circumferential sidewall (36);
at least one strain gauge (40) on the sidewall;
a communication assembly (42) operatively coupled with the at least one strain gauge;
the communication assembly including an integrated circuit (44) adapted to receive electrical signals from the at least one strain gauge related to an axial load borne by the washer;
wherein the communication assembly comprises an antenna (46) operatively coupled with the integrated circuit, and the integrated circuit is adapted to transmit wireless signals to a reader external of the washer via the antenna;
the washer further comprising a support platform (52) extending radially outwardly from the washer body, wherein the integrated circuit and the antenna are positioned on the support platform;
**characterized in that**
the integrated circuit and the antenna are encapsulated in, in particular polymeric, material that has been over-molded onto the washer; and
wherein the washer body includes an inner sidewall (92), the washer body further comprising:
a plurality of protrusions (90) extending radially inwardly from the inner sidewall and defining axially extending channels therebetween;
the protrusions sized and arranged to engage a fastener of a bolted joint received through the washer.

2. The washer of claim 1, wherein the strain gauge is encapsulated in, in particular polymeric, material that has been over-molded onto the washer.

3. The washer of one of the preceding claims, wherein the at least one strain gauge comprises at least four strain gauges on the circumferential sidewall.

4. The washer of claim 3, wherein the strain gauges are arranged symmetrically around the circumferential sidewall.

5. The washer of one of the preceding claims, wherein the at least one strain gauge is configured as a Wheatstone bridge and/or has an operating resistance range of 15 kiloohms to 23 kiloohms.

6. The washer of one of the preceding claims, wherein the washer body further comprises a raised contact area extending axially from at least one of the first or second ends.

7. The washer of one of the preceding claims, further comprising:
a protective cover received over the outer circumferential sidewall and enclosing the at least one strain gauge between the cover and the outer circumferential sidewall.

8. The washer of claim 7, wherein the protective cover comprises a first cover section proximate the communication assembly, and a second cover section enclosing the at least one strain gauge.

9. The washer of claim 7 or 8, wherein:
the washer body further comprises a first radially outwardly extending flange proximate the first end, and a second radially outwardly extending flange proximate the second end; and
the protective cover is attached to the washer body at the first and second flanges.

10. A method for determining a load in a bolted joint, the method comprising:
obtaining a bolted joint including an instrumented washer (12) as set forth in one of the preceding claims;
powering the integrated circuit (44) of the washer with an, in particular wireless, reader device;
querying the integrated circuit of the washer with the reader device; and
displaying and/or storing information on the reader device related to an axial force borne by the washer in the bolted joint.

11. A method of making an instrumented washer (12) as set forth in one of claims 1-9, the method comprising
fixing at least one strain gauge (40) to an outer circumferential surface of a washer body (30); and
operatively coupling an integrated circuit (44) and/or an antenna (46) with the at least one strain gauge

## Patentansprüche

1. Eine instrumentierte Unterlegscheibe (12), insbesondere eine lastempfindliche Unterlegscheibe, umfassend:
einen ringförmigen Unterlegscheibenkörper (30) mit einem ersten und einem zweiten gegenüberliegend angeordneten axialen Ende (32, 34) und einer äußeren Umfangsseitenwand (36);
mindestens einen Dehnungsmessstreifen (40) an der Seitenwand;
eine Kommunikationsbaugruppe (42), die funktionsfähig mit dem mindestens einen Dehnungsmessstreifen gekoppelt ist;
wobei die Kommunikationsbaugruppe eine integrierte Schaltung (44) umfasst, die dazu ausgelegt ist, elektrische Signale von dem mindestens einen Dehnungsmessstreifen zu empfangen, die sich auf eine von der Unterlegscheibe aufgenommene axiale Last beziehen;
wobei die Kommunikationsbaugruppe eine Antenne (46) umfasst, die funktionsfähig mit der integrierten Schaltung gekoppelt ist, und die integrierte Schaltung dazu ausgelegt ist, drahtlose Signale über die Antenne an ein Lesegerät außerhalb der Unterlegscheibe zu senden;
wobei die Unterlegscheibe ferner eine Stützplattform (52) umfasst, die sich radial nach außen vom Unterlegscheibenkörper erstreckt, wobei die integrierte Schaltung und die Antenne auf der Stützplattform positioniert sind;
**dadurch gekennzeichnet, dass** die integrierte Schaltung und die Antenne in einem insbesondere polymeren Material eingekapselt sind, das auf die Unterlegscheibe aufgespritzt wurde; und wobei der Unterlegscheibenkörper eine innere Seitenwand (92) aufweist, wobei der Unterlegscheibenkörper ferner umfasst:
eine Vielzahl von Vorsprüngen (90), die sich von der inneren Seitenwand radial nach innen erstrecken und dazwischen axial verlaufende Kanäle definieren;
wobei die Vorsprünge so dimensioniert und angeordnet sind, dass sie in ein Befestigungselement einer durch die Unterlegscheibe aufgenommenen Schraubverbindung eingreifen.

2. Unterlegscheibe nach Anspruch 1, wobei der Dehnungsmessstreifen in einem insbesondere polymeren Material eingekapselt ist, das auf die Unterlegscheibe aufgespritzt wurde.

3. Unterlegscheibe nach einem der vorstehenden Ansprüche, wobei der mindestens eine Dehnungsmessstreifen mindestens vier Dehnungsmessstreifen an der Umfangsseitenwand umfasst.

4. Unterlegscheibe nach Anspruch 3, wobei die Dehnungsmessstreifen symmetrisch um die Umfangsseitenwand angeordnet sind.

5. Unterlegscheibe nach einem der vorstehenden Ansprüche, wobei der mindestens eine Dehnungsmessstreifen als Wheatstone-Brücke ausgebildet ist und/oder einen Betriebswiderstandsbereich von 15 Kiloohm bis 23 Kiloohm aufweist.

6. Unterlegscheibe nach einem der vorstehenden Ansprüche, wobei der Unterlegscheibenkörper ferner einen erhöhten Kontaktbereich umfasst, der sich axial von mindestens einem der ersten oder zweiten Enden erstreckt.

7. Unterlegscheibe nach einem der vorstehenden Ansprüche, die ferner umfasst: eine Schutzabdeckung, die über der äußeren Umfangsseitenwand angeordnet ist und das mindestens eine Dehnungsmessstreifen zwischen der Abdeckung und der äußeren Umfangsseitenwand umschließt.

8. Unterlegscheibe nach Anspruch 7, wobei die Schutzabdeckung einen ersten Abdeckungsabschnitt in der Nähe der Kommunikationsbaugruppe und einen zweiten Abdeckungsabschnitt umfasst, der das mindestens eine Dehnungsmessstreifen umschließt.

9. Unterlegscheibe nach Anspruch 7 oder 8, wobei: der Unterlegscheibenkörper ferner einen ersten sich radial nach außen erstreckenden Flansch in der Nähe des ersten Endes und einen zweiten sich radial nach außen erstreckenden Flansch in der Nähe des zweiten Endes umfasst; und die Schutzabdeckung an dem Unterlegscheibenkörper an dem ersten und zweiten Flansch befestigt ist.

10. Verfahren zum Bestimmen einer Belastung in einer Schraubverbindung, wobei das Verfahren umfasst:
Bereitstellen einer Schraubverbindung mit einer instrumentierten Unterlegscheibe (12) gemäß einem der vorstehenden Ansprüche;
Versorgen der integrierten Schaltung (44) der Unterlegscheibe mit einem insbesondere drahtlosen Lesegerät;
Abfragen der integrierten Schaltung der Unterlegscheibe mit dem Lesegerät; und
Anzeigen und/oder Speichern von Informationen auf dem Lesegerät, die sich auf eine von der Unterlegscheibe in der Schraubverbindung aufgenommene Axialkraft beziehen.

11. Verfahren zur Herstellung einer instrumentierten Unterlegscheibe (12) gemäß einem der Ansprüche 1 bis 9, wobei das Verfahren umfasst:
Befestigen mindestens eines Dehnungsmessstreifens (40) an einer Außenumfangsfläche eines Unterlegscheibenkörpers (30); und funktionsfähiges Koppeln einer integrierten Schaltung (44) und/oder einer Antenne (46) mit dem mindestens einen Dehnungsmessstreifen.

## Revendications

1. Rondelle instrumentée (12), en particulier rondelle à détection de charge, comprenant :
un corps de rondelle annulaire (30) ayant des première et seconde extrémités axiales (32, 34) disposées à l'opposé et une paroi latérale circonférentielle extérieure (36) ;
au moins une jauge de contrainte (40) sur la paroi latérale ;
un ensemble de communication (42) couplé de manière opérationnelle à l'au moins une jauge de contrainte ;
l'ensemble de communication comportant un circuit intégré (44) adapté pour recevoir des signaux électriques de l'au moins une jauge de contrainte relatifs à une charge axiale supportée par la rondelle ;
dans laquelle l'ensemble de communication comprend une antenne (46) couplée de manière opérationnelle au circuit intégré, et le circuit intégré est adapté pour transmettre des signaux sans fil à un lecteur externe de la rondelle via l'antenne ;
la rondelle comprenant en outre une plateforme de support (52) s'étendant radialement vers l'extérieur à partir du corps de rondelle, dans laquelle le circuit intégré et l'antenne sont positionnés sur la plateforme de support ;
**caractérisée en ce que** le circuit intégré et l'antenne sont encapsulés dans un matériau, en particulier polymère, qui a été surmoulé sur la rondelle ; et
dans laquelle le corps de rondelle comporte une paroi latérale intérieure (92), le corps de rondelle comprenant en outre :
une pluralité de saillies (90) s'étendant radialement vers l'intérieur à partir de la paroi latérale interne et définissant des canaux s'étendant axialement entre celles-ci ;
les saillies étant dimensionnées et agencées pour être en prise avec un élément de fixation d'un assemblage boulonné reçu à travers la rondelle.

2. Rondelle selon la revendication 1, dans laquelle la jauge de contrainte est encapsulée dans un matériau, en particulier polymère, qui a été surmoulé sur la rondelle.

3. Rondelle selon l'une des revendications précédentes, dans laquelle l'au moins une jauge de contrainte comprend au moins quatre jauges de contrainte sur la paroi latérale circonférentielle.

4. Rondelle selon la revendication 3, dans laquelle les jauges de contrainte sont agencées symétriquement autour de la paroi latérale circonférentielle.

5. Rondelle selon l'une des revendications précédentes, dans laquelle l'au moins une jauge de contrainte est configurée comme un pont de Wheatstone et/ou présente une plage de résistance de fonctionnement de 15 kiloohms à 23 kiloohms.

6. Rondelle selon l'une des revendications précédentes, dans laquelle le corps de rondelle comprend en outre une zone de contact surélevée s'étendant axialement à partir d'au moins une des premières ou secondes extrémités.

7. Rondelle selon l'une des revendications précédentes, comprenant en outre :
un capot de protection reçu sur la paroi latérale circonférentielle extérieure et enfermant l'au moins une jauge de contrainte entre le capot et la paroi latérale circonférentielle extérieure.

8. Rondelle selon la revendication 7, dans laquelle le capot de protection comprend une première section de capot à proximité de l'ensemble de communication, et une seconde section de capot entourant l'au moins une jauge de contrainte.

9. Rondelle selon la revendication 7 ou 8, dans laquelle :
le corps de rondelle comprend en outre une première bride s'étendant radialement vers l'extérieur à proximité de la première extrémité, et une seconde bride s'étendant radialement vers l'extérieur à proximité de la seconde extrémité ; et
le couvercle de protection est attaché au corps de rondelle au niveau des première et seconde brides.

10. Procédé pour déterminer une charge dans un assemblage boulonné, le procédé comprenant :
l'obtention d'un assemblage boulonné comportant une rondelle instrumentée (12) selon l'une des revendications précédentes ;
l'alimentation du circuit intégré (44) de la rondelle avec un dispositif de lecture, notamment sans fil ;
l'interrogation du circuit intégré de la rondelle avec le dispositif de lecture ; et
l'affichage et/ou le stockage d'informations sur le dispositif de lecture relatives à une force axiale supportée par la rondelle dans l'assemblage boulonné.

11. Procédé de fabrication d'une rondelle instrumentée (12) selon l'une des revendications 1 à 9, le procédé comprenant la fixation d'au moins une jauge de contrainte (40) à une surface circonférentielle extérieure d'un corps de rondelle (30) ; et
le couplage opérationnel d'un circuit intégré (44) et/ou d'une antenne (46) à l'au moins une jauge de contrainte
